# EUROPEAN PATENT APPLICATION

(11) **EP 1 598 739 A1**
(43) Date of publication of application: **23.11.2005**
(21) Application number: 04711688.4
(22) Date of filing: 17.02.2004
(51) Int. Cl.: G06F 9/44

(54) **NATIVE COMPILE METHOD, NATIVE COMPILE PREPROCESSING METHOD, COMPUTER PROGRAM, AND SERVER**

(30) Priority: 18.02.2003 JP 2003039406
(71) Applicant: ACCESS CO., LTD., Tokyo 101-0064 (JP)
(72) Inventor: KAMADA, Tomihisa, Chiyoda-ku, Tokyo 1010064 (JP); SUZUKI, Hiroyuki, Chiyoda-ku, Tokyo 1010064 (JP)
(74) Representative: Strehl Schübel-Hopf & Partner
(86) International application number: PCT/JP2004/001696
(87) International publication number: WO 2004/075048

(57) **Abstract**

A method and a system are provided for executing the download processing of intermediate code concurrently with native compilation processing to reduce the execution wait time. A server (20) generates download data 42a to which external reference information is added as a header, wherein the external reference information is composed of attribute information on other unit blocks that will be required when a mobile communication terminal (10) executes native compilation and will be referenced by each of unit blocks of intermediate code. The mobile communication terminal (10) starts native compilation processing for already received unit blocks before the reception of all intermediate code from the server is completed. When a unit block is natively compiled, the already received external reference information related to the unit block is referenced to natively compile the unit block. The server (20) may integrate the external reference information, required for the native compilation of the classes, into one set of external reference information and send it before sending all the blocks of intermediate code.

## Description

### TECHNICAL FIELD

The present invention relates to a communication system including a server and mobile communication terminals, and more particularly to a native compilation preprocessing method, a native compilation method, a computer program, and a server.

### BACKGROUND ART

Recently, a mobile communication terminal such as a cellular phone can acquire an application program from a server via a network, such as the Internet, for execution of the application program on the mobile communication terminal to thereby add a new function to the terminal.

A program (source code) written in the Java (registered trademark) language, one of such application programs, is compiled into intermediate code called bytecode. Bytecode is executed, not directly by the CPU of a computer, but by a virtual machine that is a software-implemented computation engine. In addition, bytecode, which is not dependent on a particular hardware unit or OS (Operating System) and is relatively small in size, is ideal for delivering a program via a network. One of the problems with a virtual machine is that, because the bytecode is serially analyzed and executed by an interpreter (software) in the virtual machine, the execution speed is slow.

In contrast, the execution speed of code executable directly by the CPU, called native code (machine language), is much faster than the execution speed of an interpreter. To fully utilize the execution speed of the CPU of a mobile communication terminal, translation from bytecode into native code, the so-called native compilation, is necessary.

One approach to this problem is that a server executes native compilation and sends the resulting native code to a mobile communication terminal. However, because there is a possibility that native code varies according to the type (mainly, types of CPU and OS) of a mobile communication terminal and there will be more and more terminal types in future, the execution of native compilation and the management of native code for each terminal type would give the server side a heavy load. Therefore, it is desirable that native compilation be executed on the mobile communication terminal side.

However, native code compilation on a mobile communication terminal takes long, and the program cannot be executed until the processing is completed. One of conventionally known techniques for speeding up native compilation is the JIT (Just In Time) compiler (for example, see Japanese Patent Laid-Open Publication No. 2002-215411). The JIT compiler translates bytecode into native code at application execution time to allow the CPU to directly execute the application. The first time the program is executed, bytecode is compiled into native code; the second and the following times the program is executed, the native code saved in the memory is directly executed to increase execution efficiency. This enables a Java application to be executed fast. However, the JIT compiler must be executed the first time the program is executed, the wait time is inevitably required until program execution starts.

On the other hand, the data communication speed of a mobile communication terminal is relatively slow today. The data transfer speed of a wireless communication such as a cellular phone packet network is significantly slow as compared with that of a broadband communication network such as an optical communication network and an ADSL network. While the CPU installed in a cellular phone has become faster recently, the data transfer speed of a wireless communication network remains slow. Therefore, it takes relatively long to receive all bytecode of an application program and, though the CPU has become faster, it takes relatively long to compile the bytecode into native code. Thus, there is a problem that it takes long from the start of communication to the start of application program execution.

Japanese Patent Laid-Open Publication No. 2000-40007 discloses a technology for starting an application at the same time a JAR file (a compressed file of a plurality of class files) is received for concurrently executing the reception processing and the application processing to reduce the user wait time at an application start time.

However, this technology is developed to execute intermediate code with an interpreter, not to execute an application in native code. Another problem is that native compilation processing cannot be started until all bytecode is received. This is because, if a class being compiled references another class, it is usually necessary to confirm that the referenced class is present and that a particular method or a field is present in the referenced class. Therefore, even though native compilation is attempted to be executed concurrently with the download processing of intermediate code, if a referenced class is not yet received, the compilation processing of the class must be suspended until the referenced class is received. The start of application execution is further delayed after the termination of the compilation processing. As a result, it takes relatively long before the received application gets executed.

In view of the foregoing, it is an object of the present invention to provide a communication system, a native compilation preprocessing method, a native compilation method, a computer program, and a server that can execute native compilation processing concurrently with the downloading of intermediate code to reduce the execution wait time.

### DISCLOSURE OF THE INVENTION

A native compilation method according to the present invention is a native compilation method for use on a mobile communication terminal for translating OS-independent intermediate code into native code, comprising the steps of sequentially receiving intermediate code of unit blocks, to each of which external reference information is added, one block at a time via a wireless communication network, the external reference information composed of attribute information on other unit blocks referenced by each of the unit blocks when the intermediate code of each of the unit blocks is translated into native code; starting native compilation processing for translating the intermediate code of received unit blocks into native code before reception of all intermediate code is completed; and executing native compilation processing for a unit block by referencing already received external reference information related to the unit block when intermediate code of the unit block is translated into native code.

The mobile communication terminal starts native compilation processing for the intermediate code of received unit blocks before the reception of all intermediate code is completed. At this time, because the external reference information composed of attribute information on other unit blocks referenced by the unit block has already been received with the unit block, the native compilation can be started immediately without any problem. In this specification, the expression "via a wireless communication network" does not mean transmission/reception only via a wireless communication network but means transmission/reception not only via a wireless communication network but also via a wired communication network.

Therefore, it is possible to overlap the time required for native compilation, in part or in whole, with the time during which the intermediate code is downloaded. That is, concurrently with application downloading, translation into native code can be executed making use of an otherwise idle time of the CPU. As a result, the application execution wait time can be significantly reduced as compared with a case where the compilation is started when an application is started.

Another native compilation method according to the present invention is a native compilation method for use on a mobile communication terminal for translating OS-independent intermediate code into native code while receiving the intermediate code from an external source, comprising the steps of receiving one set of external reference information followed by intermediate code of a plurality of unit blocks via a wireless communication network when the intermediate code of the unit blocks is translated into native code, the one set of external reference information being integrated attribute information on other unit blocks referenced by each of the unit blocks; starting native compilation processing for translating the intermediate code of received unit blocks into native code before reception of all intermediate code is completed; and executing native compilation processing for a unit block by referencing already received external reference information related to the unit block when intermediate code of the unit block is translated into native code. In this method, the external reference information is not received with the unit blocks, but one set of external reference information is received before a plurality of unit blocks. In this case, too, concurrently with application downloading, translation into native code can be executed making use of an otherwise idle time of the CPU.

A native compilation preprocessing method according to the present invention is a native compilation preprocessing method for use on a server before sending OS-independent intermediate code to a mobile communication terminal via a network, comprising the steps of translating a source program into intermediate code, one unit block at a time; collecting attribute information on other unit blocks as external reference information, the attribute information referenced by each of unit blocks when the intermediate code of the each of unit blocks is translated into native code; adding the collected external reference information to the each of unit blocks; and sequentially sending the unit blocks, to each of which the external reference information is added, to the mobile communication terminal via a wireless communication network.

In this method, the server adds the collected external reference information to the unit blocks and sequentially sends them to the mobile communication terminal via a wireless communication network. In this case, if the external reference information to be added to a unit block is the same as the external reference information added to a unit block that will be sent earlier, the addition of the same external reference information to the unit block that will be sent later can be omitted. This reduces the amount of transmission data.

Another native compilation preprocessing method according to the present invention is a native compilation preprocessing method for use on a server before sending OS-independent intermediate code to a mobile communication terminal via a network, comprising the steps of translating a source program into intermediate code, one unit block at a time; collecting attribute information on other unit blocks as external reference information, the attribute information referenced by each of unit blocks when the intermediate code of the each of unit blocks is translated into native code; and sequentially sending one set of the collected external reference information, followed by a plurality of unit blocks, to the mobile communication terminal via a wireless communication network.

In this method, the collected external reference information is not added to the unit blocks, but the collected external reference information is integrated into one set of external reference information and is sent before the plurality of unit blocks.

The present invention can also be implemented as a computer program for executing the steps of each native compilation method.

A server according to the present invention is a server that executes native compilation preprocessing before sending OS-independent intermediate code to a mobile communication terminal via a network, comprising means for translating a source program into intermediate code, one unit block at a time; means for collecting attribute information on other unit blocks as external reference information, the attribute information referenced by each of unit blocks when the intermediate code of the each of unit blocks is translated into native code; means for adding the collected external reference information to the each of unit blocks; and means for sequentially sending the unit blocks, to each of which the external reference information is added, to the mobile communication terminal via a wireless communication network. The function of this server is as described in the first native compilation preprocessing method described above.

Another server according to the present invention is a server that executes native compilation preprocessing before sending OS-independent intermediate code to a mobile communication terminal via a network, comprising means for translating a source program into intermediate code, one unit block at a time; means for collecting attribute information on other unit blocks as external reference information, the attribute information referenced by each of unit blocks when the intermediate code of the each of unit blocks is translated into native code; and means for sequentially sending the collected external reference information, followed by a plurality of unit blocks, to the mobile communication terminal via a wireless communication network. The function of this server is as described in the second native compilation preprocessing described above.

The present invention can also be implemented as a communication system comprising a server that executes the native compilation preprocessing described above and a mobile communication terminal that receives OS-independent intermediate code from the server via a communication network and executes native compilation processing.

### BRIEF DESCRIPTION OF THE DRAWINGS

FIG. 1 is a diagram showing the general configuration of a communication system to which the present invention is applied.
FIG. 2 is a block diagram showing an example of the general hardware configuration of the mobile communication terminal shown in FIG. 1.
FIG. 3 is a block diagram showing an example of the general hardware configuration of the server shown in FIG. 1.
FIGS. 4A and 4B are diagrams showing two examples of the source code of Java application classes.
FIGS. 5A and 5B are diagrams showing examples of external reference information on classes A and B in FIGS. 4A and 4B.
FIG. 6 is a diagram showing a first data translation method for translating Java source code into the corresponding native code in an embodiment of the present invention.
FIG. 7 is a flowchart of processing corresponding to the data translation method in FIG. 6.
FIG. 8 is a diagram for explaining a second data translation method for translating Java source code into the corresponding native code in an embodiment of the present invention.
FIG. 9 is a flowchart of processing corresponding to the data translation method in FIG. 8.

### BEST MODE FOR CARRYING OUT THE INVENTION

Embodiments of the present invention will be described in detail with reference to the drawings.

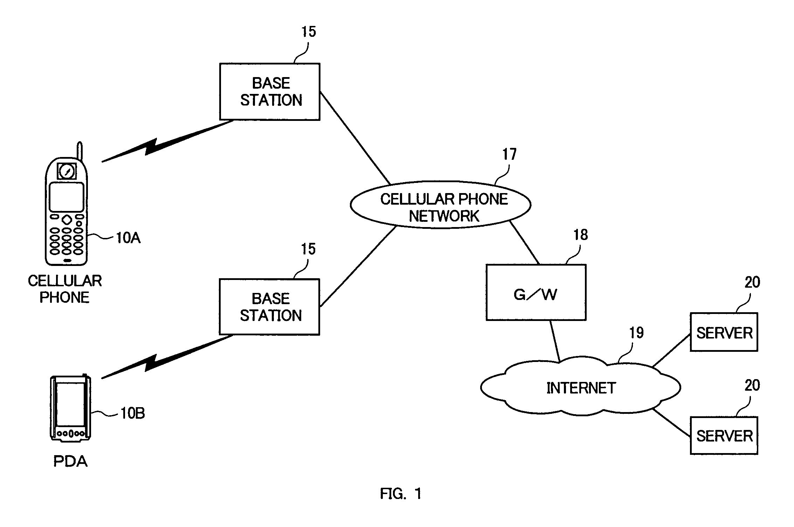

FIG. 1 shows the general configuration of a communication system to which the present invention is applied. In the figure, a cellular phone 10A and a portable information terminal (PDA) 10B are shown as examples of mobile communication terminals. A mobile communication terminal, to which the present invention is applicable, is not limited to those terminals, but the present invention is applicable to any similar terminal that downloads intermediate code from a communication network and executes native compilation. In this specification, those terminals are collectively referred to as a mobile communication terminal apparatus 10 (hereinafter, also simply called a mobile communication terminal). The mobile communication terminal 10 is connected to a cellular phone network 17 via a base station 15, and connected further to a communication network such as the Internet 19 via a gateway (G/W) 18. Servers 20 in various sites are connected to the Internet 19, and the mobile communication terminal 10 can access the server 20 for downloading a desired application program, such as a Java application, in an intermediate code format.

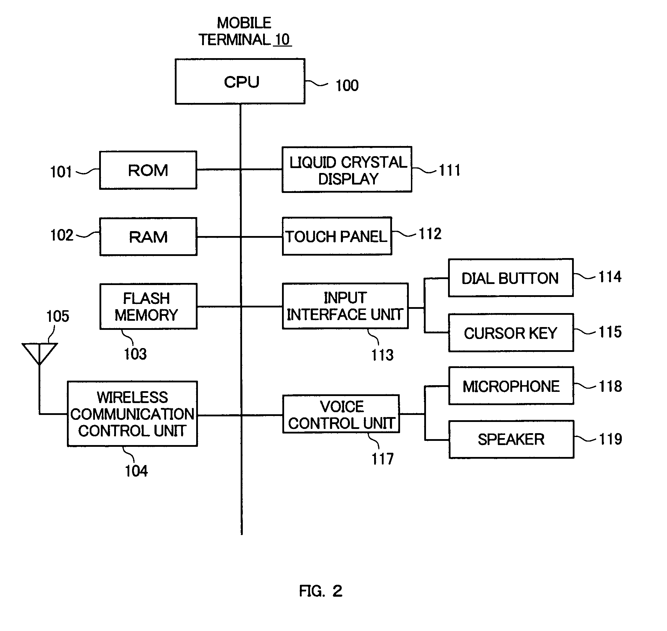

FIG. 2 shows an example of the general hardware configuration of the mobile communication terminal 10. The mobile communication terminal 10 has a CPU 100 that controls the whole terminal. The CPU 100 is connected to a ROM 101, a RAM 102, a flash memory 103, a wireless communication control unit 104, a liquid crystal display 111, a touch panel 112, an input interface 113, and a voice control unit 117.

The ROM 101 is a nonvolatile read-only memory in which various programs executed by the CPU 100 and fixed data are stored. The RAM 102 is a writable memory provided as the work area of the CPU 100 and the temporary storage area of data. The flash memory 103 is a rewritable memory in which additional application programs and various types of data are stored non-volatilely. The wireless communication control unit 104 is a unit that wirelessly communicates (sends/receives) voices and data to and from the base station 15 via an antenna 105. The liquid crystal display 111 constitutes a display unit that has a display screen. The touch panel 112, usually placed overlapped on the display screen, is an input device that senses the contact position on the screen at which a stick or a finger touches. Note that this touch panel is not an indispensable element of the present invention. The input interface 113 is a unit that accepts a user' s input operation of dial buttons 114 and cursor keys 115 on the operation unit of the mobile communication terminal. The voice control unit 117, to which a microphone 118 and a speaker 119 are connected, is a unit that controls the input/output of voices.

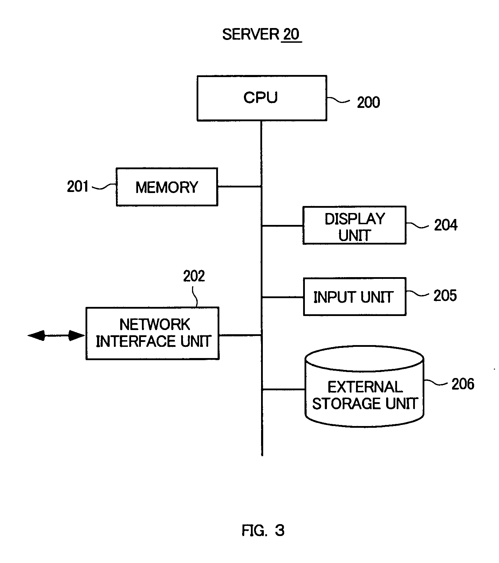

FIG. 3 shows an example of the general hardware configuration of the server 20. The server 20 has a CPU 200 that controls the whole server. The CPU 200 is connected to a memory 201, a network interface unit 202, a display unit 204, an input unit 205, and an external storage unit 206. The memory 201 may include the ROM, RAM, and flash memory described above. The network interface unit 202 is a unit that connects to a communication network such as the Internet 19. The display unit 204 is any display unit, and the input unit 205 is an input unit such as a keyboard. The external storage unit 206 is a large-volume storage unit such as a hard disk unit or the like.

The following describes the operation of this system. In this embodiment, a program to be downloaded is the bytecode (intermediate code) of a Java application program. Note that an application program, to which the present invention is applied, is not limited to a Java coded program but the present invention is applicable to any program that has similar intermediate code, for example, a C# coded program, etc.

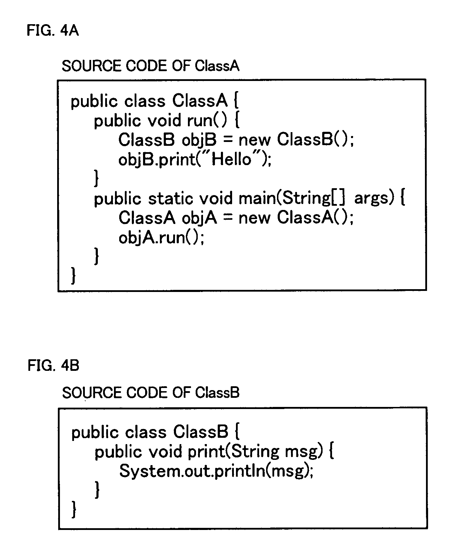

Usually, a Java application program is composed of a plurality of classes. A class, a minimum execution unit of Java, usually includes a plurality of methods and fields (variables). A method defines an operation, while a field defines data. FIGS. 4A and 4B show two examples of the source code of Java application classes. Class A describes coding for calling the 'print' method in Class B and for passing the character string "Hello", and class B describes coding for displaying the character string. Therefore, when the intermediate code of class A is natively compiled, it is necessary to verify that other classes or methods referenced by Class A are actually present. This is necessary to prevent, in advance, a situation where the native code program generated as a result of compilation cannot be executed.

Therefore, when the intermediate code of a class is compiled natively, the information on the class that is referenced by the compiled class is necessary. At that time, there is no problem if the referenced class has already been downloaded; however, because the compilation has started before the communication is completed, there is no guarantee that the referenced class has already been downloaded. The point here is that what is necessary at native compilation time is only the attribute information regarding the referenced class, not the whole of the referenced class. This attribute information is referred to as external reference information in this specification. According to the present invention, when the bytecode of a class is natively compiled, the external reference information on at least the classes referenced by the compiled class has already been acquired, as will be described later.

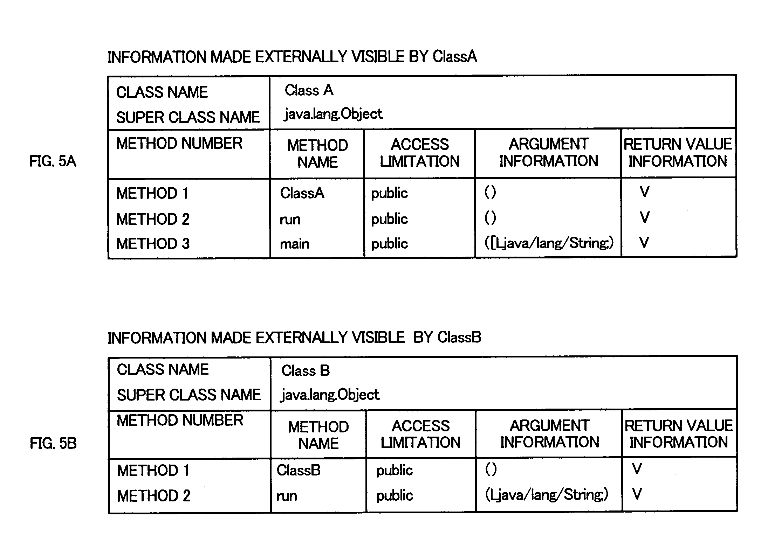

FIGS. 5A and 5B show examples of external reference information on classes A and B shown in FIGS. 4A and 4B. FIG. 5A shows information made externally visible by class A, and FIG. 5B shows information made externally visible by class B. The information made externally visible by a class, which is external reference information to be used by other classes, includes a class name, a super-class name, and method information. The method information includes the method numbers, method names, access limitation, argument information, and return value information on the methods included in the class.

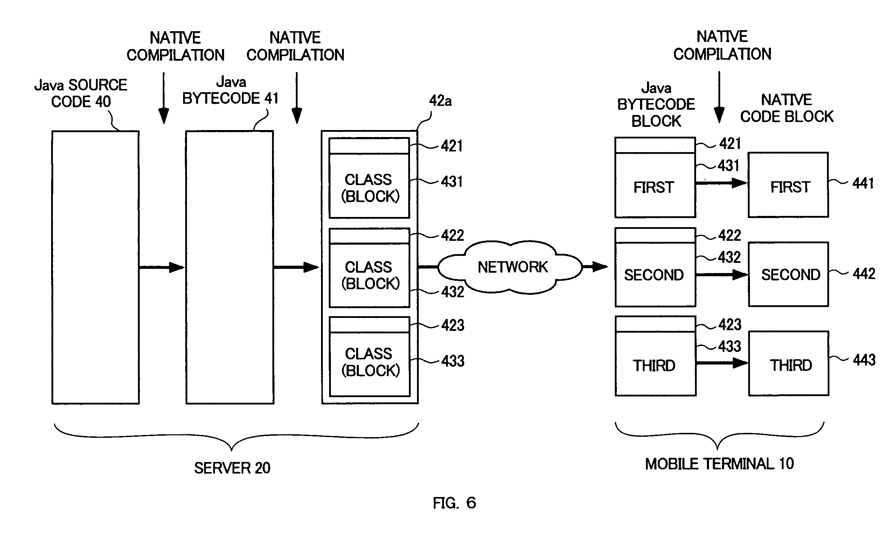

FIG. 6 shows a first data translation method in this embodiment for translating Java source code into the corresponding native code.

The Java source code is compiled by the Java compiler (bytecode compilation) to generate Java bytecode 41, which is the intermediate code, as in the conventional system. In this embodiment, a server generates download data 42a, which includes external reference information, from this Java bytecode 41. In this specification, this native compilation preprocessing is called pre-native compilation. The download data 42a in this example, generated for each class, has a header that includes external reference information necessary for the native compilation of the class. That is, to a bytecode block 431 corresponding to a class, a header 421 that is a set of external reference information on the classes referenced by the class is added. The information made externally visible by that class need not be included in the header. Bytecode blocks 432 and 433 each have a similar header.

The class transmission order is known in advance and, therefore, if external reference information included in the header of a class that is downloaded earlier is required also in a class that is downloaded later, the addition of the external reference information to the later class can be omitted. For example, assume that bytecode blocks 431, 432, and 433 are sent from the server in this order when a mobile communication terminal downloads an application. In this case, the external reference information included in the header 421 of the bytecode block 431 that is sent earlier can be omitted from a header 422 to be added to the bytecode block 432. Similarly, the external reference information included in the headers 421 and 422 of the bytecode blocks 431 and 432 that are sent earlier can be omitted from a header 423 to be added to the bytecode block 433. The total amount of header information can be reduced in this way. For a class that does not reference other classes at all, a header need not be added to the bytecode block.

The download data 42a with this configuration is received by the mobile communication terminal side and is natively compiled in order of reception of blocks, one Java bytecode class at a time. When the reception of the bytecode block of a class is completed, all necessary information on the native compilation of the class is available and, so, the native compilation can be started immediately. That is, each of the bytecode blocks 431, 432, and 433 is natively compiled using the external reference information in each of the headers 421, 422, and 423 and the already-received external reference information to generate native code 441, 442, and 443.

In this embodiment, external reference information to be added to each class is added at the head of the bytecode block as a header. To make necessary external reference information available earlier, this configuration is desirable but is not always required. For example, external reference information can be added at the end of each bytecode block (as a footer) or distributed in a unit block to achieve an equivalent effect.

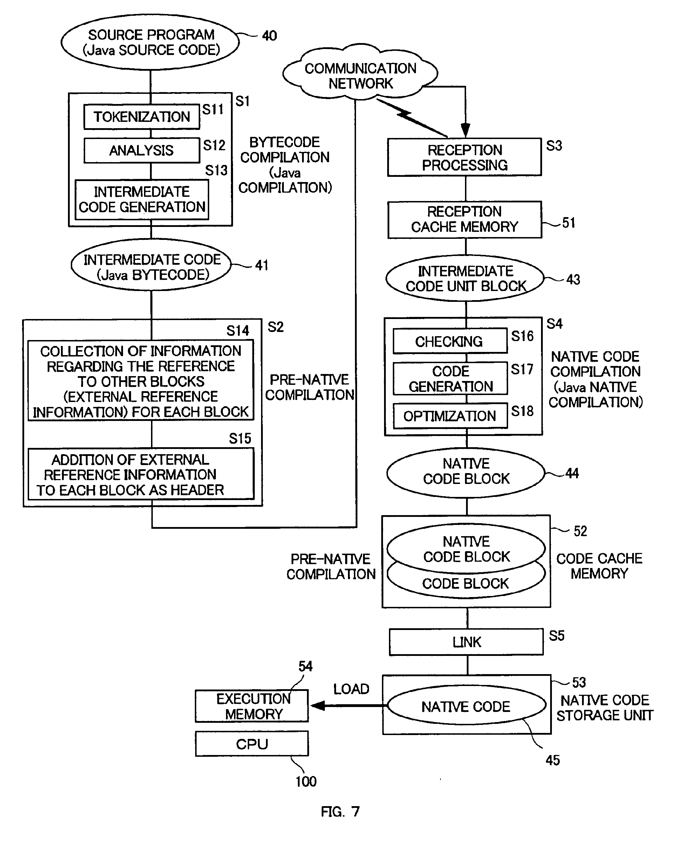

FIG. 7 shows a flowchart of the processing corresponding to the data translation method shown in FIG. 6. The first half of this processing corresponds to the processing of the server 20, while the last half corresponds to the processing of the mobile communication terminal 10. A typical example given below assumes that, based on a download request from the mobile communication terminal 10 for an application program registered in the database of the server, the intermediate code of the specified application program is sent from the server to the mobile communication terminal.

First, the server 20 runs the bytecode compiler to translate a source program 40, which will be sent, to the intermediate code (Java bytecode) 41 (S1). That is, the server tokenizes the source code (S11), analyzes the tokenization result (S12), and generates intermediate code (S13). The server 20 executes pre-native compilation for the intermediate code 41 (S2). More specifically, for each block (class in this case), the server collects external reference information regarding the reference to other blocks (S14) and adds the external reference information to each block as the header (S15). The download data 42a is prepared in this way, and this download data 42a is sent sequentially, one block at a time, to the mobile communication terminal via the communication network.

The mobile communication terminal sequentially receives the download data 42a (S3), one block at a time, and stores it once in a reception cache memory 51. This reception cache memory 51 is provided, for example, in the RAM 102 (FIG. 2). After the reception of the first intermediate code unit block is completed, the mobile communication terminal immediately retrieves the intermediate code from the reception cache memory 51, one unit block 43 at a time, and natively compiles it (S4). That is, the mobile communication terminal translates the intermediate code into CPU-dependent native code while referencing the required external reference information. More specifically, this native compilation is composed of the validity checking of reference to other classes (S16), the generation of native code (S17), and optimization (S18). The validity checking of class reference is the processing for checking, in advance, whether correct information on a class to be referenced is present and whether access limitation is correct when reference is made from one class to another, based on the external reference information shown in FIG. 5. The optimization is not always required. The native compilation of each block produces a native code block 44. Those native code blocks 44 are once saved in a code cache memory 52 (in RAM 102). Next, the mobile communication terminal links those native code blocks 44 and stores the link result in a native code storage unit 53 as native code 45 to be executed. The native code storage unit 53 may be a RAM 102 or a flash memory 103. To save the native code non-volatilely, the latter is used. The native code thus acquired is loaded into an execution memory 54 (in the RAM 102) for execution by the CPU.

In the first data translation method described in FIG. 6 and FIG. 7, when the bytecode block of a class is natively compiled, the external reference information required for the class has already been received as the header of the block and, therefore, the native compilation can be executed immediately.

Next, the following describes a second data translation method in this embodiment for translating Java source code into the corresponding native code.

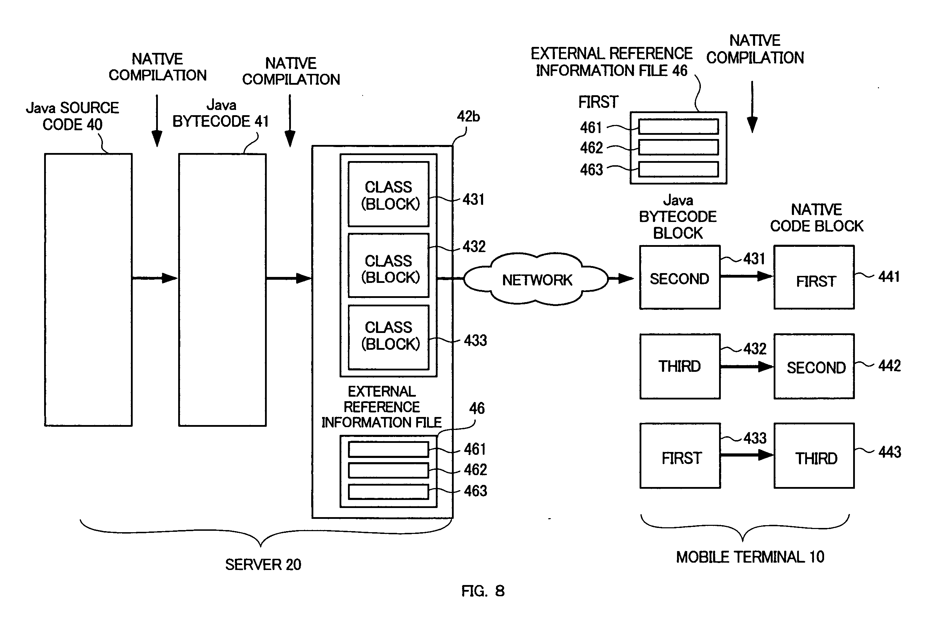

FIG. 8 is a diagram for explaining the second data translation method. The same reference numerals are used for the corresponding elements shown in FIG. 6. This method is different from the first data translation method in FIG. 6 in the following point; that is, the bytecode of a class and the external reference information required for the class are blocked as a set for each class (i.e., distributed) in the first data translation method while a set of external reference information required for all classes is collected in one external reference information file 46 (i.e., centralized) in the second data translation method. This external reference information file 46 contains information, which is made externally visible by the classes (FIG. 5A and (b)), as a set of non-duplicated information. The external reference information file 46 is first sent at download time before the bytecode blocks are sent from the server to the mobile communication terminal. By referencing this external reference information file 46 when native compilation is executed on the mobile communication terminal, the information required for native compilation can be obtained for any class. The external reference information file 46 does not need to include information that is made externally visible by all classes. That is, the information on a class not referenced by other classes does not need to be included. Nor does the information need to be of a file format; it is only required that data virtually equivalent to the data included in the file is attached to the bytecode.

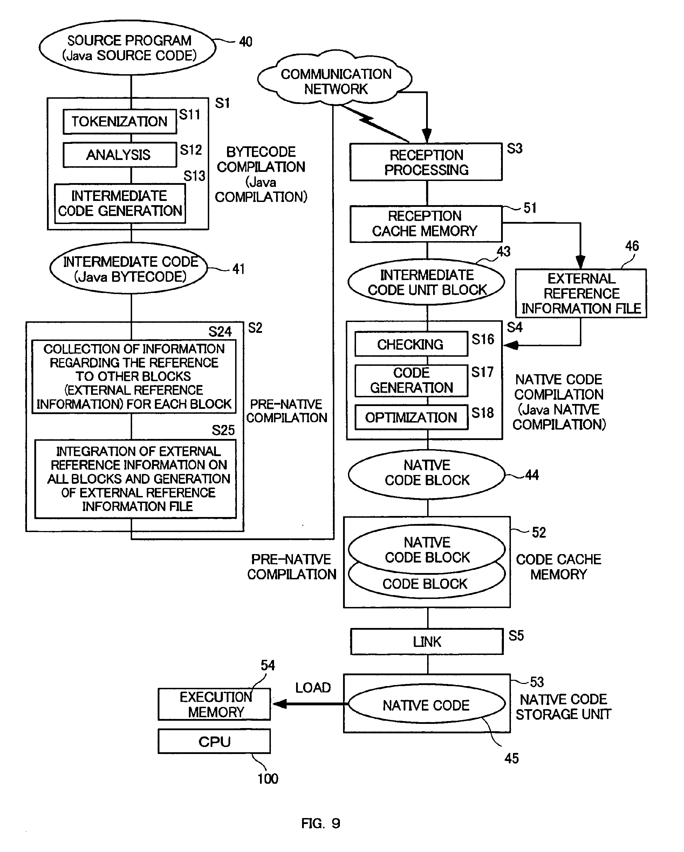

FIG. 9 shows a flowchart of the processing corresponding to the data translation method in FIG. 8. The processing is similar to the first processing in FIG. 7 except the difference that is outline below. The difference is the contents of pre-native compilation processing S2 in the server and the native compilation processing S4 in the mobile communication terminal. That is, in pre-native compilation processing S2 in the server, the server collects external reference information regarding the reference to other blocks for each block (class in this case) (S24) and integrates this external reference information to generate the external reference information file 46 (S25).

In the native compilation processing S4 in the mobile communication terminal, the processing is similar to that of the native compilation processing S4 in FIG. 7 except that native compilation is executed while referencing the external reference information file 46.

When the bytecode block of each class is natively compiled according to the second data translation method described in FIG. 8 and FIG. 9, the external reference information required by the class is given by the external reference information file 46 that is received first and, therefore, the native compilation can be executed immediately.

While a preferred embodiment of the present invention has been described, it is apparent that many other modifications and variations may be made without departing from the scope of the claimed inventions.

For example, although a unit block is made to correspond to a class, some other unit block may be used.

Although the native compilation is started after the reception of the first bytecode block is completed, it is also possible to start the native compilation before the reception of the first bytecode block is completed.

It is also possible to compress the data of the external reference information file when it is sent and to decompress the file on the receiving side.

Although most effective in the wireless communication network described above, the present invention can be widely used for the downloading of intermediate code in a communication network including a wired communication network.

In addition, the present invention is not limited to the downloading of intermediate code from a server to a client terminal but can also be applied to the transfer of intermediate code between terminals.

According to the present invention, a server executes pre-native compilation processing to generate external reference information and sends this information with the intermediate code. This allows the mobile communication terminal side to start native compilation with the use of the external reference information before the reception of intermediate code is completed, thus making it possible to overlap the time required for native compilation, in part or in whole, with the time during which the intermediate code is downloaded. That is, the concurrent execution of application downloading and translation into native code making use of an otherwise idle time of the CPU can reduce the execution wait time as compared with a case where the compilation is started when an application is started.

### INDUSTRIAL APPLICABILITY

The present invention is advantageously applicable to a communication system where the communication speed is relatively low.

## Claims

1. A native compilation method for use on a mobile communication terminal for translating OS-independent intermediate code into native code, comprising the steps of:
sequentially receiving intermediate code of unit blocks, to each of which external reference information is added, one block at a time via a wireless communication network, said external reference information composed of attribute information on other unit blocks referenced by each of said unit blocks when the intermediate code of each of said unit blocks is translated into native code;
starting native compilation processing for translating the intermediate code of received unit blocks into native code before reception of all intermediate code is completed; and
executing native compilation processing for a unit block by referencing already received external reference information related to said unit block when intermediate code of said unit block is translated into native code.

2. A native compilation method for use on a mobile communication terminal for translating OS-independent intermediate code into native code while receiving the intermediate code from an external source, comprising the steps of:
receiving one set of external reference information followed by intermediate code of a plurality of unit blocks via a wireless communication network when the intermediate code of the unit blocks is translated into native code, said one set of external reference information being integrated attribute information on other unit blocks referenced by each of said unit blocks;
starting native compilation processing for translating the intermediate code of received unit blocks into native code before reception of all intermediate code is completed; and
executing native compilation processing for a unit block by referencing already received external reference information related to said unit block when intermediate code of said unit block is translated into native code.

3. A native compilation preprocessing method for use on a server before sending OS-independent intermediate code to a mobile communication terminal via a network, comprising the steps of:
translating a source program into intermediate code, one unit block at a time;
collecting attribute information on other unit blocks as external reference information, said attribute information referenced by each of unit blocks when the intermediate code of said each of unit blocks is translated into native code;
adding the collected external reference information to said each of unit blocks; and
sequentially sending the unit blocks, to each of which said external reference information is added, to said mobile communication terminal via a wireless communication network.

4. The native compilation preprocessing method according to claim 3 wherein, if the external reference information to be added to one unit block is the same as the external reference information added to some other unit block that will be sent earlier, the same external reference information to be added to the some other unit block that will be sent later can be omitted.

5. A native compilation preprocessing method for use on a server before sending OS-independent intermediate code to a mobile communication terminal via a network, comprising the steps of:
translating a source program into intermediate code, one unit block at a time;
collecting attribute information on other unit blocks as external reference information, said attribute information referenced by each of unit blocks when the intermediate code of said each of unit blocks is translated into native code; and
sequentially sending one set of the collected external reference information, followed by a plurality of unit blocks, to said mobile communication terminal via a wireless communication network.

6. A computer program for translating OS-independent intermediate code into native code, comprising the steps of:
sequentially receiving intermediate code of unit blocks, to each of which external reference information is added, one block at a time via a wireless communication network, said external reference information composed of attribute information on other unit blocks referenced by each of said unit blocks when the intermediate code of each of said unit blocks is translated into native code;
starting native compilation processing for translating the intermediate code of received unit blocks into native code before reception of all intermediate code is completed; and
executing native compilation processing for a unit block by referencing already received external reference information related to said unit block when intermediate code of said unit block is translated into native code.

7. A computer program for use on a mobile communication terminal for translating OS-independent intermediate code into native code while receiving the intermediate code from an external source, comprising the steps of:
receiving one set of external reference information followed by intermediate code of a plurality of unit blocks via a wireless communication network when the intermediate code of the unit blocks is translated into native code, said one set of external reference information being integrated attribute information on other unit blocks referenced by each of said unit blocks;
starting native compilation processing for translating the intermediate code of received unit blocks into native code before reception of all intermediate code is completed; and
executing native compilation processing for a unit block by referencing already received external reference information related to said unit block when intermediate code of said unit block is translated into native code.

8. A server that executes native compilation preprocessing before sending OS-independent intermediate code to a mobile communication terminal via a network, comprising:
means for translating a source program into intermediate code, one unit block at a time;
means for collecting attribute information on other unit blocks as external reference information, said attribute information referenced by each of unit blocks when the intermediate code of said each of unit blocks is translated into native code;
means for adding the collected external reference information to said each of unit blocks; and
means for sequentially sending the unit blocks, to each of which said external reference information is added, to said mobile communication terminal via a wireless communication network.

9. The server according to claim 8 wherein, if the external reference information to be added to one unit block is the same as the external reference information added to some other unit block that will be sent earlier, the same external reference information to be added to the some other unit block that will be sent later can be omitted.

10. A server that executes native compilation preprocessing before sending OS-independent intermediate code to a mobile communication terminal via a network, comprising:
means for translating a source program into intermediate code, one unit block at a time;
means for collecting attribute information on other unit blocks as external reference information, said attribute information referenced by each of unit blocks when the intermediate code of said each of unit blocks is translated into native code; and
means for sequentially sending the collected external reference information, followed by a plurality of unit blocks, to said mobile communication terminal via a wireless communication network.

11. A communication system comprising a server and a mobile communication terminal that receives OS-independent intermediate code from said server via a communication network,
wherein said server translates a source program into intermediate code, one unit block at a time,
collects attribute information on other unit blocks as external reference information, said attribute information referenced by each of unit blocks when the intermediate code of said each of unit blocks is translated into native code,
adds the collected external reference information to said each of unit blocks; and
sequentially sends the unit blocks, to each of which said external reference information is added, to said mobile communication terminal via a wireless communication network, and
wherein said mobile communication terminal sequentially receives the intermediate code of the unit blocks, to each of which said external reference information is added, one block at a time via the wireless communication network,
starts native compilation processing for translating the intermediate code of received unit blocks into native code before reception of all intermediate code is completed,
executes native compilation processing for a unit block by referencing already received external reference information related to said unit block when intermediate code of said unit block is translated into native code, and
executes the native code obtained by the native compilation processing.

12. A communication system comprising a server; and a mobile communication terminal that receives OS-independent intermediate code from said server via a communication network,
wherein said server
translates a source program into intermediate code, one unit block at a time;
collects attribute information on other unit blocks as external reference information, said attribute information referenced by each of unit blocks when the intermediate code of said each of unit blocks is translated into native code; and
sequentially sends one set of the collected external reference information, followed by a plurality of unit blocks, to said mobile communication terminal via wireless communication network and
wherein said mobile communication terminal
receives said one set of external reference information followed by intermediate code of said plurality of unit blocks,
starts native compilation processing for translating the intermediate code of received unit blocks into native code before reception of all intermediate code is completed,
executes native compilation processing for a unit block by referencing already received external reference information related to said unit block when intermediate code of said unit block is translated into native code, and
executes the native code obtained by the native compilation processing.
